# EUROPÄISCHE PATENTSCHRIFT

(11) **EP 1 868 870 B1**
(45) Veröffentlichungstag und Bekanntmachung des Hinweises auf die Patenterteilung: **04.01.2012**
(21) Anmeldenummer: 06724123.2
(22) Anmeldetag: 07.04.2006
(51) Int. Cl.: B62D 25/06, B62D 65/02

(54) **DACHKONSTRUKTION FÜR EIN KRAFTFAHRZEUG MIT EINEM FLANSCH MIT EINEM LÄNGS-AUFLAGEABSCHNITT**
ROOF STRUCTURE FOR A MOTOR VEHICLE WITH A FLANGE HAVING A LONGITUDINAL SUPPORTING SECTION
STRUCTURE DE TOIT POUR UN VEHICULE AUTOMOBILE COMPORTANT UNE BORDURE POURVUE D'UNE PARTIE DE SUPPORT LONGITUDINAL

(30) Priorität: 11.04.2005 DE 102005016458
(43) Veröffentlichungstag der Anmeldung: 26.12.2007
(73) Patentinhaber: GM Global Technology Operations LLC, Detroit, MI 48265-3000 (US)
(72) Erfinder: HALLIK, Matthias, 65207 Wiesbaden (DE)
(74) Vertreter: Strauss, Peter
(86) Internationale Anmeldenummer: PCT/EP2006/003182
(87) Internationale Veröffentlichungsnummer: WO 2006/108569

(56) Entgegenhaltungen:
- EP-A- 1 232 936
- EP-A- 1 375 306
- WO-A-01/94141
- FR-A- 2 632 923

## Beschreibung

Die vorliegende Erfindung betrifft eine Dachkonstruktion für ein Kraftfahrzeug gemäß dem Oberbegriff des Anspruches 1.

Aus der Praxis sind Fahrzeuge bekannt, die eine Mehrzahl unterschiedlicher Dachkonstruktionen aufweisen. So existieren beispielsweise neben Fahrzeugen mit einem klassischen, geschlossenen Blechdach auch Fahrzeuge mit Schiebedächern oder mit so genannten Panoramadächern, bei welchen eine großflächige Glasscheibe als Fahrzeugdach Verwendung findet.

Die verschiedenen zur Anwendung kommenden Dachkonstruktionen basieren dabei auf einer einheitlichen Dachrahmengrundkonstruktion für den jeweiligen Fahrzeugtyp. Hierbei weisen die aus der Praxis bekannten Fahrzeugkarosserien in klassischer Weise wenigstens zwei A-, B- und C-Säulen auf, welche mittels zweier sich in Längsrichtung des Fahrzeugs erstreckender Strukturelemente und einem dachtragenden Rahmen verbunden sind, wobei die verschiedenen Dachmodule in diesen dachtragenden Rahmen eingesetzt werden. Diese Konstruktion eröffnet die Möglichkeit, die jeweils vom Käufer bzw. Kunden gewählte optionale Dachkonstruktion relativ einfach umzusetzen.

In jüngerer Zeit wählen gerade die Käufer von Kombifahrzeugen oder Vans an Stelle eines normalen Blechdachs oder eines Blechdachs mit integriertem Schiebedach, auf Grund eines gesteigerten Bewusstseins für gehobenen Komfort einen Kombi oder einen Van mit einem Panoramadach.

Bei im Hause der Patentinhaberin diskutierten Dachkonstruktionen, bei denen ein "Blechdachmodul" gegen ein "Panoramadachmodul" ausgetauscht wird, liegt die Panoramascheibe auf einem durchgehenden, umlaufenden Zusatzrahmen oder Adapterträger auf. Eine mögliche Ausführungsform eines solchen Dachmoduls ist in der DE 103 55 656 A1 beschrieben.

Ferner weist bei einer herkömmlichen Dachkonstruktion der Dachbereich des Fahrzeugs einen Dachkanal auf. Dieser Dachkanal wiederum weist im vorderen Dachbereich einen Höcker bzw. eine leichte Erhöhung im Seitenwanddachkanal auf, die wegen der Ziehbarkeit des Dachblechs bei der Montage erforderlich ist, um zu verhindern, dass das Dach beim Ziehen reißt.

Problematisch bei den aus der Praxis bekannten Dachkonstruktionen ist jedoch, dass bei diesen die von außen nach innen gerichtete, frei verfügbare Länge des als Auflagefläche dienenden Flansches nicht ausreichend für eine zuverlässige Lagerung einer Panoramascheibe dimensioniert ist und zudem der Auflageflansch nicht die notwendige Höhe aufweist, damit die Panoramascheibe und der umlaufende Dachrahmen eine im Wesentlichen ebene Fläche bilden, d.h. zueinander fluchten.

Zudem zeigen die bekannten Dachkonstruktionen die Problematik, dass der standardmäßig vorhandene Dachkanal nicht für eine Scheibenklebung verwendet werden kann, da dessen Bauform auf den Dachträger und die Dachleistenhöhe gewöhnlicher Dachkonstruktionen abgestimmt ist.

Ferner ist es nicht möglich, über den Höcker im Dachkanal der Seitenwand eine Scheibe zu kleben.

Somit muss bisher die Auflagefläche im Bedarfsfall nachträglich entsprechend angepasst werden, wobei in der Regel ein umlaufender Zusatzrahmen, der als Auflage und Klebeflansch in den Rohbau des Fahrzeugs eingeschweißt wird, zur Anwendung kommt. Dieser Zusatzrahmen erstreckt sich dabei aus der A-Säule des Fahrzeugs in den seitlichen Dachrahmen.

Der zusätzliche Schweißvorgang, der nachträglich durchgeführt werden muss, um den Zusatzrahmen in die Dachkonstruktion einzubauen, ist dabei jedoch mit einem hohen Bearbeitungsaufwand verbunden, wodurch die Herstellungskosten und somit auch die Anschaffungskosten für das Fahrzeug erhöht werden.

Ein möglicher Lösungsansatz wird in der gattungsgemäßen FR 2632 923 A beschrieben. Eine Dachkonstruktion für ein Kraftfahrzeug weist dort einen dachtragenden Dachrahmen für ein Dachmodul auf, welcher einen zur Dachmitte hin weisenden Flansch hat. Der Flansch ist durch zwei Profilteile des Dachrahmens gebildet, wobei an einem der beiden Profilteile ein Auflageabschnitt zur Auflage des Dachmoduls angeformt ist.

Ein dachtragender Dachrahmen für ein Dachmodul mit einem zur Dachmitte hin weisenden Flansch ist auch aus der EP 1 375 306 A bekannt. Das Dachmodul liegt dort direkt auf dem Flansch auf.

Es ist Aufgabe der vorliegenden Erfindung, eine herkömmliche Dachkonstruktion der vorgenannten Gattung bereit zu stellen, dessen dachtragender Dachrahmen zur Aufnahme eines Dachmoduls besonders stabil ist und zugleich relativ kostengünstig hergestellt werden kann.

Diese Aufgabe wird durch die Dachkonstruktion mit den Merkmalen des Anspruchs 1 gelöst.

Dabei wird eine Dachkonstruktion für ein Kraftfahrzeug vorgeschlagen, welche einen dachtragenden Dachrahmen aufweist, der dazu geeignet ist, verschiedene Dachmodule wie beispielsweise Panoramadächer, etc. aufzunehmen.

Der Dachrahmen der Dachkonstruktion weist hierzu einen umlaufenden, jeweils zur Dachmitte hinweisenden Flansch auf. In Fahrzeuglängsrichtung weist der Flansch auf jeder Fahrzeugseite einen Längs-Auflageabschnitt zur Auflage eines Dachmodules auf, welcher sich über die Länge des Dachrahmens und parallel zum Dachrahmen vom freien Ende des zugeordneten Flansches aus in Richtung zur Fahrzeugdachmitte hin erstreckt.

Dieser Längs-Auflageabschnitt verlängert dabei in vorteilhafter Weise den Flansch und somit die zur Auflage der Dachmodule zur Verfügung stehende Auflagefläche. Der Flansch und der zugeordnete Längs-Auflageabschnitt sind zudem einstückig ausgebildet.

Dadurch ist es möglich, dass die Dachkonstruktion vorteilhaft eine konstante Auflagefläche für eine Panoramascheibe oder ein entsprechend anderes Dachmodul bildet.

Besonders vorteilhaft verlängert hierbei der erfindungsgemäße Längs-Auflageabschnitt den Flansch des Dachrahmens in Richtung zur Fahrzeugdachmitte hin, wodurch die frei verfügbare Auflagefläche zur Auflagerung eines Dachmoduls wesentlich vergrößert ist. Hierbei ist es besonders vorteilhaft, dass sich diese Verlängerung bei der Herstellung der Fahrzeugkarosserie leicht integrieren läßt, und einen nachträglichen Arbeitsschritt zur Einbringung einer zusätzlichen Auflagefläche überflüssig macht, da die erfindungsgemäße Konfiguration bereits im Basisfahrzeug ausgebildet ist.

Diese konstante Auflagefläche ermöglicht hierbei die Verwendung entsprechend großflächiger Glasdächer, so dass eine große, frei durchsehbare Fläche vorhanden ist, die das Komfortempfinden des Fahrers und möglicher Beifahrer spürbar erhöht, sowie ein verbessertes Raumgefühl hervorruft.

Der Auflageabschnitt ist im Wesentlichen stufenartig ausgebildet, wodurch der Flansch zusätzlich zur Verlängerung, welche er durch den Auflageabschnitt erfährt auch eine Erhöhung in eine Fahrzeughöhenrichtung schafft. Damit ist es vorteilhaft möglich, unterschiedliche Dachmodule mit unterschiedlichen Höhenprofilen in das Fahrzeug einzufügen, ohne zusätzliche Adapter oder Zusatzrahmen einzuschweißen, um Höhenunterschiede, die durch die geometrischen Beschaffenheiten der Dachmodule verursacht sind, auszugleichen.

Zusätzlich ist bei der erfindungsgemäßen, einstückig ausgeführten Dachkonstruktion kein zusätzlicher Einschweißrahmen bzw. Adapterträger mehr erforderlich, was eine Reduzierung des Arbeitsaufwands zur Herstellung und somit eine Kostenreduzierung bewirkt.

Gleichzeitig bedeutet der Verzicht auf den nachträglich eingeschweißten Adapterträger, dass die bei den bisherigen Lösungen zur Einbringung verschiedener Dachmodule während der Fertigung entstehende Vielzahl unterschiedlicher Rohkarosserien reduziert und damit letztlich die Produktionsrate erhöht werden kann.

Nach der Erfindung ist der Flansch durch ein äußeres Profilteil, ein inneres Profilteil und ein dazwischen liegendes Bauteil des Dachrahmens dreilagig ausgebildet und der Längs-Auflageabschnitt besteht aus einer Lage.

Weitere vorteilhafte Weiterbildungen der erfindungsgemäßen Dachkonstruktion ergeben sich aus den Merkmalen der Unteransprüche.

So kann die vorbestimmte Höhe, auf welche der Flansch angehoben wird, einer Höhe entsprechen, bei welcher das verwendete Dachmodul fluchtend mit dem umgebenden Dachrahmen abschließt. Damit ist es vorteilhaft möglich, dass sowohl eine Panoramascheibe, als auch ein gewöhnliches Blechdachmodul fluchtend mit der umlaufenden Dachfläche der Fahrzeugkarosserie abschließen können, wodurch Luftverwirbelungen reduziert werden können, welche zu einem erhöhten Luftwiderstand, der sich negativ auf die Wirtschaftlichkeit des Fahrzeugs auswirkt, sowie zu einer Lärmentwicklung führen können.

Darüber hinaus kann ein Quer-Auflageabschnitt in einem vorderen Dachabschnitt durch ein quer verlaufendes Verbindungselement der A-Säulen des Fahrzeugs ausgebildet sein, und in einem hinteren Abschnitt kann ein weiterer Quer-Auflageabschnitt durch einen quer verlaufenden, inneren Dachrahmen gebildet sein. Diese Ausgestaltung unterstützt hierbei vorteilhaft die durch den Auflageabschnitt realisierte, konstante Auflagefläche für die Panoramascheibe oder ein entsprechend anderes Dachmodul, so dass eine vollumfängliche Lagerung des Panoramadachs oder anderer Dachmodule erzielt wird. Zudem kann durch die Verwendung der im Kraftfahrzeug bereits vorhandenen, querverlaufenden Dachelemente eine Vereinfachung des Herstellungsprozesses erreicht werden.

Die vorstehend beschriebene Erfindung wird nachfolgend anhand einer beispielhaften Ausführungsform unter Bezugnahme auf die Zeichnungen näher erläutert. Dabei zeigt:
- Fig. 1: eine perspektivische Ansicht eines Fahrzeugs mit einem Panoramadach;
- Fig. 2: eine Detailansicht eines Abschnitts der erfindungsgemäßen Dachkonstruktion;
- Fig. 3: die Detailansicht der Dachkonstruktion aus Fig. 2 mit einem herkömmlichen Blechdach;
- Fig. 4: die Detailansicht der Dachkonstruktion aus Fig. 2 mit einem Panoramadach;

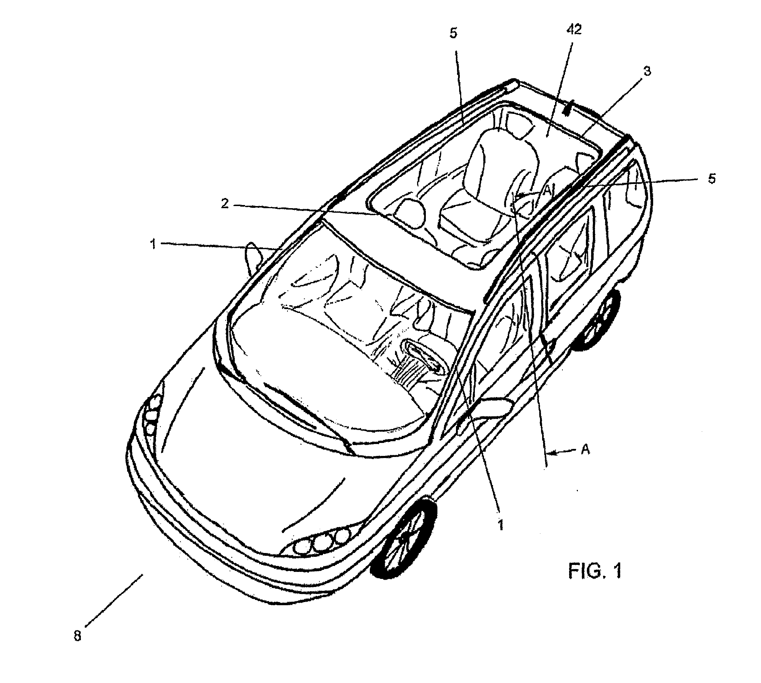

Fig. 1 zeigt eine perspektivische Darstellung eines Kraftfahrzeugs mit einem Panoramadach. Das in Fig. 1 dargestellte Fahrzeug 8 weist dabei eine Dachkonstruktion mit einem Dachrahmen auf, wobei der Dachrahmen eine umlaufende Auflage zur Lagerung eines Dachmoduls enthält.

Die Auflage besteht dabei aus zwei Längs-Auflageabschnitten 5 sowie zwei Quer-Auflageabschnitten 2 bzw. 3.

Die Quer-Auflageabschnitte 2 bzw. 3 werden dabei in einem vorderen Fahrzeugdachbereich durch ein quer über die A-Säulen 1 verlaufendes Verbindungselement 2 gebildet, und in einem hinteren Fahrzeugdachbereich durch einen querverlaufenden inneren Dachrahmen 3.

Ferner erstrecken sich die seitlich in Fahrzeuglängsrichtung entlang verlaufenden Längs-Auflageabschnitte 5 vom Heck des Fahrzeugs entlang bis zu den A-Säulen 1.

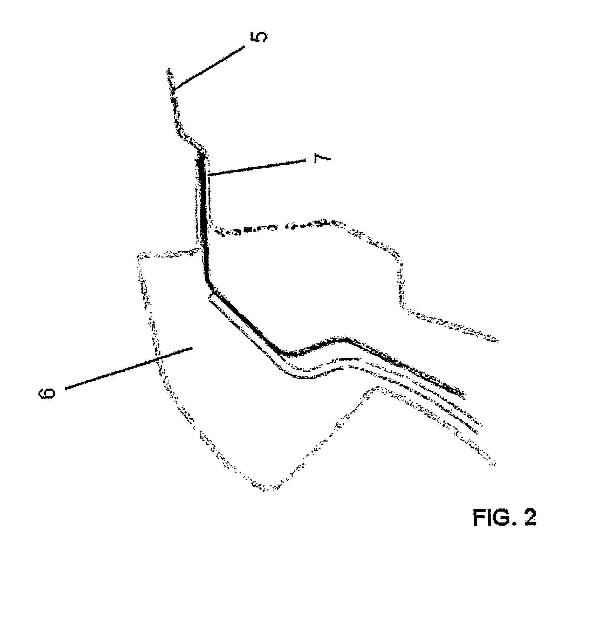

In Fig. 2 ist eine vergrößerte Detailansicht der Dachkonstruktion in einem Schnitt längs der in Fig. 1 eingezeichneten Linie A-A dargestellt. Dabei kann aus Fig. 2 entnommen werden, dass der Dachrahmen 6 einen zur Fahrzeugmitte weisenden Flansch 7 aufweist, an dem der stufenförmig ausgebildete Auflageabschnitt 5 ausgebildet ist. Die stufenförmige Ausbildung des Auflageabschnitts 5 erhöht dabei den Flansch in Fahrzeughöhenrichtung auf eine vorbestimmte Höhe, wobei diese Erhöhung in einem Bereich zwischen 10 und 50 mm liegen kann. In dieser vorbestimmten Höhe verläuft der Auflageabschnitt 5 innen am Dachkanalhöcker vorbei und parallel zum Dachkanal.

Wie sich aus Fig. 2 entnehmen läßt, wird der Flansch 7 durch den Auflageabschnitt um etwa eine Flanschlänge auf das 1,5- bis 2,5-fache verlängert. Im Schnitt entspricht die Verlängerung in den meisten Fällen einer Verlängerung des Flansches auf das Doppelte seiner ursprünglichen Ausmaße.

In der in Fig. 2 dargestellten Ausführungsform entspricht die Vergrößerung des Flansches 7 durch den Auflageabschnitt 5 einer Verlängerung in einem Bereich zwischen 15 mm und 30 mm. Alternativ kann die Vergrößerung auch, in Abhängigkeit vom jeweiligen Fahrzeug, in einem Bereich von 10 bis 60 mm liegen.

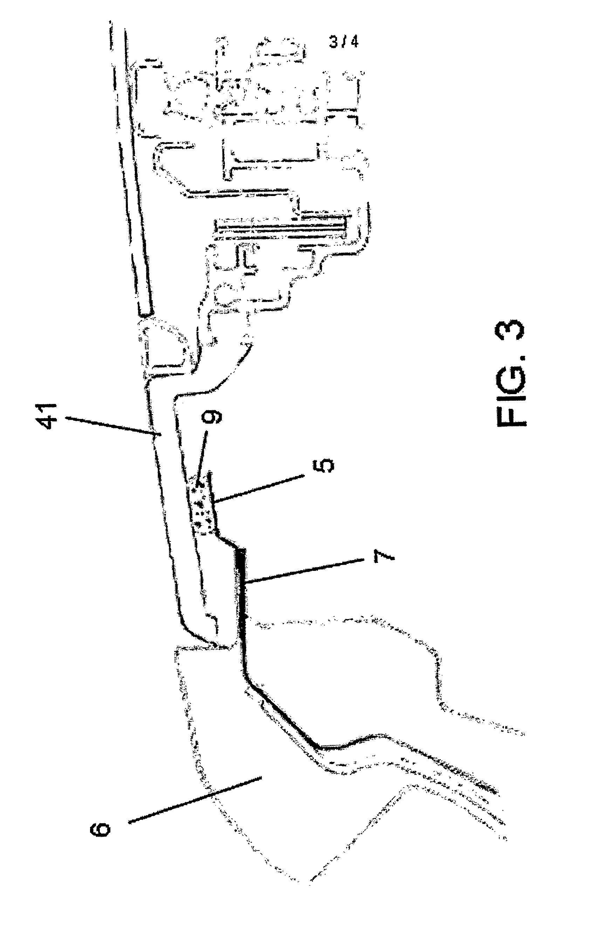

Fig. 3 zeigt die Detailansicht der Dachkonstruktion aus Fig. 2 mit einem gewöhnlichen Blechdachmodul 41, das auf dem stufenförmig ausgebildeten Auflageabschnitt 5 aufliegt, und sich über den Flansch 7 bis an den Rand des Dachrahmens 6 erstreckt.

Das Blechdachmodul 41 ist in dieser Ausführungsform mittels Klebmasse 9 mit dem Auflageabschnitt 5 am Dachrahmen 6 verklebt. Bei der Verwendung eines Blechdachmoduls 41 ist es alternativ auch möglich, das Modul 41 auf Grund seiner Ausdehnung in Richtung der Fahrzeugbreite nicht nur mit dem am Flansch 7 ausgebildeten Auflageabschnitt 5, sondern direkt mit dem Flansch 7 zu verkleben.

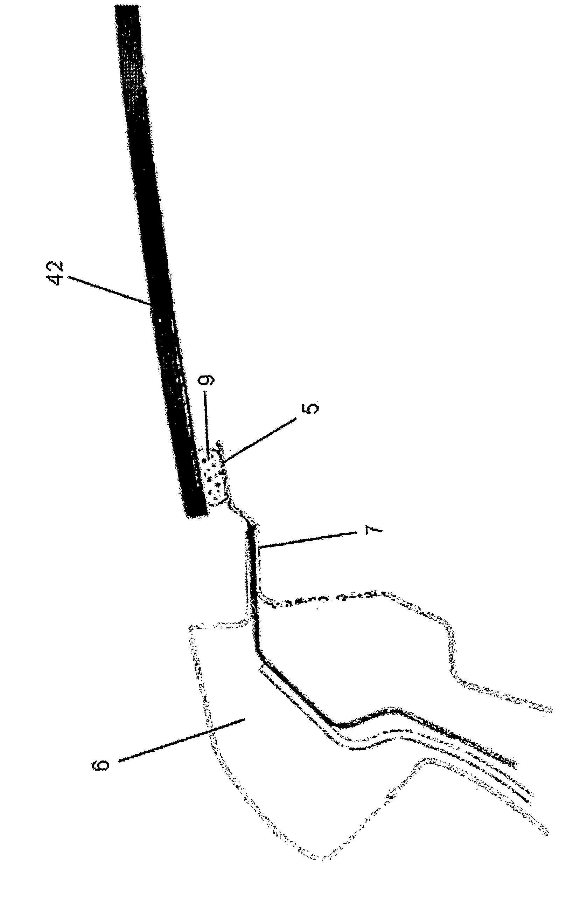

In Fig. 4 wird eine alternative Ausführungsform der Detailansicht aus Fig. 2 gezeigt, bei welcher ein Panoramadachmodul 42 als Fahrzeugdach verwendet wird.

Die Glasscheibe des Panoramadachmoduls 42 liegt dabei ausschließlich auf dem am Flansch 7 ausgebildeten Auflageabschnitt 5 auf. Wie das Blechdachmodul aus Fig. 3 ist auch das Panoramadachmodul 42 mit dem Dachrahmen 6 verklebt. Die Verklebung des Panoramadachmoduls 42 mit dem Dachrahmen 6 erfolgt dabei derart, dass das Panoramadachmodul 42 mittels Klebmasse 9 mit dem Auflageabschnitt 5 verklebt ist.

Außer der vorstehend beschriebenen, bevorzugten Ausführungsform der Dachkonstruktion für ein Kraftfahrzeug der vorliegenden Erfindung ergeben sich dem Fachmann, basierend auf den vorgeschlagenen alternativen Ausführungsformen, weitere Möglichkeiten zur Lösung der grundlegenden Aufgabe der Erfindung.

### Bezugszeichenliste

- 1: A-Säule
- 2: vorderer Quer-Auflageabschnitt
- 3: quer verlaufender innerer Dachrahmen
- 5: Auflageabschnitt
- 6: Dachrahmen
- 7: Flansch
- 8: Fahrzeug
- 41: Blechdachmodul
- 42: Panoramadachmodul

## Patentansprüche

1. Dachkonstruktion für ein Kraftfahrzeug mit einem dachtragenden Dachrahmen (6) zur Aufnahme von verschiedenen Dachmodulen (41, 42), wie beispielsweise Panoramadächer, Schiebedächer, etc., wobei am Dachrahmen (6) ein jeweils zur Dachmitte hin weisender Flansch (7) ausgebildet ist, welcher in Fahrzeuglängsrichtung auf jeder Fahrzeugseite einen Längs-Auflageabschnitt (5) zur Auflage eines Dachmodules (41, 42) aufweist, wobei der Längs-Auflagenabschnitt (5) sich über die Länge des Dachrahmens (6) und parallel zum Dachrahmen (6) vom freien Ende des zugeordneten Flansches (7) aus in Richtung zur Fahrzeugdachmitte hin erstreckt und wobei der Längs-Auflageabschnitt (5) stufenförmig ausgebildet ist, um eine Auflagefläche in vorbestimmter Höhe bereitzustellen, **dadurch gekennzeichnet, dass** Flansch (7) mit dem Längs-Auflageabschnitt (5) einstückig ausgebildet ist, wobei der Flansch (7) durch ein äußeres Profilteil, ein inneres Profilteil und ein dazwischen liegendes Bauteil des Dachrahmens (6) dreilagig ausgebildet ist und der Längs-Auflageabschnitt (5) aus einer Lage besteht.

2. Dachkonstruktion nach Anspruch 1, **dadurch gekennzeichnet, dass** die vorbestimmte Höhe in Fahrzeughöhenrichtung der Höhe entspricht, bei welcher das jeweils verwendete Dachmodul (41, 42) fluchtend mit dem umgebenden Dachrahmen (6) abschließt.

3. Dachkonstruktion nach Anspruch 1 oder 2, **dadurch gekennzeichnet, dass** ferner ein Quer-Auflageabschnitt (2) in einem vorderen Fahrzeugbereich durch ein quer verlaufendes Verbindungselement der A-Säulen (1) ausgebildet ist, und dass ein weiterer Quer-Auflageabschnitt in einem hinteren Fahrzeugbereich durch einen quer verlaufenden, inneren Dachrahmen (3) ausgebildet ist.

## Claims

1. A roof structure for a motor vehicle, comprising a roof-supporting roof frame (6) for accommodating various roof modules (41, 42) such as panoramic roofs, sliding roofs, etc, with a respective flange (7) being arranged on the roof frame (6), facing towards the center of the roof and comprising a longitudinal support section (5) in the longitudinal direction of the vehicle on each side of the vehicle for supporting a roof module (41, 42), with the longitudinal support section (5) extending over the length of the roof frame (6) and parallel to the roof frame (6) from the free end of the associated flange (7) in the direction towards the center of the vehicle roof, and with the longitudinal support section (5) being arranged in a stepped manner in order to provide a support surface at a predetermined height, **characterized in that** the flange (7) is integrally arranged with the longitudinal support section (5), with the flange (7) being arranged in three layers by an external profile part, an internal profile part and an interposed component of the roof frame (6) and the longitudinal support section (5) consisting of one layer.

2. A roof construction according to claim 1, **characterized in that** the predetermined height in the height direction of the vehicle corresponds to the height in which the respectively used roof module (41, 42) is in true alignment with the encompassing roof frame (6).

3. A roof construction according to claim 1 or 2, **characterized in that** further a transverse support section (2) is arranged in a front vehicle region by a transversely extending connecting element of the A-pillar (1), and that a further transverse support section is arranged in a rear vehicle region by a transversely extending inside roof frame (3).

## Revendications

1. Structure de toit pour un véhicule à moteur avec un cadre de toit (6) portant le toit et destiné à recevoir différents modules de toit (41, 42), par exemple des toits panoramiques, coulissants, etc., dans lequel est formée sur le cadre de toit (6) une bride (7) orientée vers le milieu du toit, qui présente dans le sens longitudinal du véhicule, de chaque côté du véhicule, une section d'appui longitudinale (5) pour l'appui d'un module de toit (41, 42), laquelle section d'appui longitudinale (5) s'étend sur la longueur du cadre de toit (6) et parallèlement au cadre de toit (6) de l'extrémité libre de la bride (7) associée vers le milieu du toit du véhicule et laquelle section d'appui longitudinale (5) est en forme de gradins afin de fournir une surface d'appui d'une hauteur prédéterminée, **caractérisée en ce que** la bride (7) avec la section d'appui longitudinale (5) sont formées d'un seul tenant, la bride (7) étant formée en trois couches par une partie profilée extérieure, une partie profilée intérieure et un composant du cadre de toit (6) situé entre celles-ci et la section d'appui longitudinale (5) se composant d'une couche.

2. Structure de toit selon la revendication 1, **caractérisée en ce que** la hauteur prédéterminée dans le sens de la hauteur du véhicule correspond à la hauteur à laquelle le module de toit (41, 42) utilisé s'aligne de niveau avec le cadre de toit (6) qui l'entoure.

3. Construction de toit selon la revendication 1 ou 2, **caractérisée en ce qu'**une section d'appui transversale (2) est en outre formée dans une partie avant du véhicule par un élément de liaison des montants A (1) qui s'étend transversalement, et **en ce qu'**une autre section d'appui transversale est formée dans un cadre de toit intérieur (3) qui s'étend transversalement dans une partie arrière du véhicule.
